# EUROPEAN PATENT SPECIFICATION

(11) **EP 0 766 704 B1**
(45) Date of publication and mention of the grant of the patent: **23.12.1998**
(21) Application number: 95924039.1
(22) Date of filing: 21.06.1995
(51) Int. Cl.: C08F 10/02, C08F 2/34, C08F 4/642

(54) **POLYMERIZATION PROCESS AND CATALYST SYSTEMS USEFUL THEREIN**
POLYMERISATIONSVERFAHREN UND DAFÜR GEEIGNETE KATALYSATORSYSTEME
PROCEDE DE POLYMERISATION ET SYSTEMES CATALYSEURS UTILISES

(30) Priority: 24.06.1994 US 265364
(43) Date of publication of application: 09.04.1997
(73) Proprietor: EXXON CHEMICAL PATENTS INC., Baytown, TX 77520-2149 (US)
(72) Inventor: WELBORN, Howard, Curtis, Jr., DECEASED (US); WALZER, John, Flexer, Jr., Seabrook, TX 77586 (US); SAGAR, Vispi, Rustom, League City, TX 77573 (US); POIROT, Eugene, Edmond, Baytown, TX 77520 (US); CANICH, Jo Ann, Marie, Houston, TX 77058 (US); BURKHARDT, Terry, John, Kingwood, TX 77345 (US)
(74) Representative: Dew, Melvyn John
(86) International application number: US9507911
(87) International publication number: WO9600246

(56) References cited:
- EP-A- 0 582 480
- EP-A- 0 593 083

## Description

### FIELD OF THE INVENTION

This invention relates to polymerization processes and to catalyst systems useful therein. Particularly, the invention relates to metallocene catalysts useful in a continuous gas phase polymerization process for producing high molecular weight polymers.

### BACKGROUND OF THE INVENTION

A new catalyst technology has developed which provides for the modification and/or control over the properties and characteristics of a polymer. This technology principally involves the general field of transition metal catalysis.

These new catalysts are referred to as bulky ligand transition metal catalysts which are formed from a bulky ligand transition metal compound and an activator. The bulky ligand of the transition metal compound may contain a multiplicity of bonded atoms, preferably carbon atoms and typically contain a cyclic structure such as, for example, a cyclopentadienyl ligand or a substituted cyclopentadienyl ligand, or any other ligand capable of η-5 bonding to the transition metal atom. The transition metal is typically a Group 4, 5 or 6 transition metal or may be a metal from the lanthanide and actinide series. Other ligands may be bonded to the transition metal, such as but not limited to hydrocarbyl, halogen or any other univalent anionic ligand. Generally in the art, these bulky ligand catalysts are referred to as metallocene catalysts.

Metallocene catalysts are useful in solution-phase, slurry phase, gas phase and high pressure polymerization processes. When using metallocenes with a low degree of substitution on the cyclopentadienyl ring (e.g., bis-methylcyclopentadienyl zirconium dichloride) in a gas phase polymerization process, high molecular weight polymers can be difficult to produce, especially polymers having fractional melt indices.

One means of solving this problem in the art would be to use a cost prohibitive hydrogen removal system in the feed or recycle system. Such hydrogen removal systems, commonly referred to as "hydrogen scrubbers," have been used with traditional Ziegler-Natta catalyst systems. These scrubbers typically contain a hydrogenation catalyst. Hydrogenation catalysts generally contain a noble metal such as palladium, platinum, rhodium and ruthenium on a support material, for example alumina. For more details on hydrogenation catalysts and hydrogen removal systems, see U.S. Patent Nos. 3,146,223, 4,200,714 and 4,851,488. U.S. Patent 4,851,488 also describes a nickel catalyst useful for removing hydrogen. Use of a hydrogenation catalyst in a process where the catalyst feed stream contains terminal olefins is problematic, because a significant amount of isomerized products (e.g., 2-hexene from 1-hexene) can be formed. Typically these internal olefins are difficult to polymerize and can eventually build up to such a level so as to detrimentally affect polymerization.

Thus, a need exists in the industry for a metallocene catalyst, especially useful in a continuous gas phase polymerization process, for the production of high molecular weight polymers, without the need for an expensive and complicated hydrogen removal system.

### SUMMARY OF THE INVENTION

This invention generally relates to catalysts particularly useful in a continuous gas phase polymerization process for producing high molecular weight polymers. The invention specifically relates to a gas phase polymerization process utilizing particular metallocene catalysts to produce polymers having low melt indices.

The metallocene catalyst of the invention is generally a substituted bis-(cyclopentadienyl) Group 4 transition metal catalyst, where independently each cyclopentadienyl ligand is substituted with one or more hydrocarbyl radicals, selected from the group consisting of methyl, ethyl, propyl or butyl.

In a preferred embodiment, the polymerization process of the invention utilizes the catalyst described above in a continuous gas phase polymerization process. The polymers produced by the process of the invention in one embodiment, have melt indices in the range of from 0.01 to less than about 5 dg/min.

### DETAILED DESCRIPTION OF THE INVENTION

### Introduction

The invention relates to a gas phase polymerization process for producing polymers having a high molecular weight in the presence of metallocene catalysts, specifically bulky ligand transition metal catalysts. While there are many metallocene catalysts described in the art, these catalyst generate an excess of hydrogen, particularly in a gas phase polymerization process. The hydrogen generated in a gas phase process limits the production of high molecular weight polymers. In a continuous gas phase process where a recycle stream is employed, hydrogen concentration builds in the system to a steady state value incompatible with the production of high molecular weight polymer. Thus, without a removal system such as a hydrogen scrubber, high molecular weight polymers, particularly those with fractional melt indices are difficult to produce.

Applicants have discovered a specific group of metallocene catalysts that are capable of producing very low melt index products in a gas phase polymerization process. The metallocene catalysts of the invention are significantly less sensitive to hydrogen, or in other words, produce less hydrogen, or in the presence of hydrogen still produce high molecular weight polymers.

It has been discovered that those metallocenes with a low degree of substitution on the cyclopentadienyl ring generate a significant amount of hydrogen during polymerization. The amount of hydrogen generated by these metallocenes limits their ability to produce low melt index polymers.

It has also been discovered that the concentration of hydrogen build-up in a reactor using these metallocenes increases to a steady state such that these metallocene's ability to produce fractional melt index polymer is very difficult, if not impossible.

### Catalyst and Catalyst Systems

The transition metal component of the metallocene catalyst of this invention is a Group 4 transition metal compound containing ligands capable of η-5 bonding to the metal center (formally donating six electrons to the metal). Such ligands include substituted cyclopentadienyl ligands, heterocycles containing Group 15 and 16 elements, especially nitrogen, oxygen, phosphorus and sulfur, and non-carbon Group 14 elements, especially silicon and germanium wherein the ligands capable of η-5 bonding to the metal center are substituted with at least three substituent groups in total. Other ligands may be bonded to the transition metal, such as but not limited to hydrocarbyl, halogen or any other univalent anionic ligand.

The preferred Group 4 transition metals are zirconium, hafnium and titanium, the most preferred being zirconium. The transition metal may be in any oxidation state, preferably +3 or +4 or a mixture thereof, and +4 is most preferred.

The metallocene catalyst component of the invention is activated as has been well established in the art by alumoxane and/or ionizing activators or any other activator. For examples of activators useful in this invention, see EP-A-0 520 732, EP-A-0 277 003, EP-A-0 277 004, EP-A-0 520 732 and EP-A-0 500 944 and U.S. Patent Nos. 5,153,151, 5,198,401, 5,241,025, 5,241,025, 5,057,475, 5,017,714 and 5,324,800.

More commonly, the transition metal component of the metallocene catalyst of this invention are generally substituted bis(cyclopentadienyl) Group 4 transition metal catalysts.

In general, these compounds may be represented by the following general formula:

(C₅H₅₋ₓRₓ)(C₅H_{5-y}R_{y})MQ₂

wherein:
M is a Group 4 metal especially zirconium, hafnium and titanium;
(C₅H₅₋ₓRₓ) and (C₅H_{5-y}R_{y}) are independently a cyclopentadienyl ring substituted with from zero to five R radicals;
x is from 0 to 5 denoting the degree of substitution, y is from 0 to 5 denoting the degree of substitution, and x + y equals 4, 5, 6, 7, or 8, and when x+y=4, the number of substituents on each ring is different.
each R substituent is, independently selected from the group consisting of methyl, ethyl, propyl or butyl.
Q are independently, hydride radicals, hydrocarbyl radicals, substituted hydrocarbyl radicals, halocarbyl radicals, substituted halocarbyl radicals, and hydrocarbyl- and halocarbyl-substituted organometalloid radicals, or two Q are joined and bound to the metal atom to form a metallacycle ring containing from about 3 to about 20 carbon atoms or may be an alkylidene; or if the activator component is an alumoxane or other Lewis acid activators capable of alkylating the metal component, Q may be any anionic univalent ligand provided that Q is not a cyclopentadienyl ligand and would additionally include halogens, alkoxides, aryloxides, amides and phosphides.

In another embodiment, the metallocene catalyst component is a bridged metallocene catalyst component represented by the following formula:

R"(C₅H₄₋ₓRₓ)(C₅H_{4-y}R_{y})MQ₂

wherein:
M is a Group 4 metal especially zirconium, hafnium and titanium;
(C₅H₄₋ₓRₓ) and (C₅H_{4-y}R_{y}) are independently a cyclopentadienyl ring substituted with from zero to four R radicals;
x is from 0 to 4 denoting the degree of substitution, y is from 0 to 4 denoting the degree of substitution, and x + y equals 4, 5, 6, 7, or 8.
each R substituent is, independently, a hydrocarbyl radical selected from the group consisting of methyl, ethyl, propyl or butyl ;
Q are independently, hydride radicals, hydrocarbyl radicals, substituted hydrocarbyl radicals, halocarbyl radicals, substituted halocarbyl radicals, and hydrocarbyl- and halocarbyl-substituted organometalloid radicals, or two Q are joined and bound to the metal atom to form a metallacycle ring containing from about 3 to about 20 carbon atoms or may be an alkylidene; or if the activator component is an alumoxane or any other Lewis acid activator capable of alkylating the transition metal component, Q may be any anionic univalent ligand provided that Q is not a cyclopentadienyl ligand and would additionally include halogens, alkoxides, aryloxides, amides and phosphides;
and R" is one or more of, or a combination of, a carbon, a germanium, a silicon, a phosphorous or a nitrogen atom containing radical bridging the (C₅H₄-ₓRₓ) and (C₅H_{4-y}R_{y}) rings including but not limited to R'₂C, R'₂Si, R'₂SiR'₂Si, R'₂SiR'₂C, R'₂Ge, R'₂SiR'₂Ge, R'₂GeR'₂C, R'N, R'P, R'₂CR'N, R'₂CR'P, R'₂SiR'N, R'₂SiR'P, R'₂GeR'N, R'₂GeR'P where each R' is independently, a radical group which is hydride, C₁₋₃₀ hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen.

Illustrative, but non-limiting examples of R radicals are hydrocarbyl radicals including methyl, ethyl, propyl or butyl.

Illustrative, but non-limiting examples of Q radicals include hydride, methyl, ethyl, phenyl, propyl, butyl, amyl, hexyl, cyclohexyl, heptyl, tolyl, trifluromethyl, tetramethylene and pentamethylene (both Q), methylidene (both Q) trimethylsilyl, triphenylsilyl, and tris(trimethylsilyl)methyl including isomers thereof if any exist. Additionally if the activator component is an alumoxane Q can additionally be chloro, bromo, iodo, fluoro, methyoxy, ethoxy, propoxy, phenoxy, dimethylamide and dimethylphosphide.

Illustrative but non-limiting examples of R" bridging groups include dimethylsilyl, diethylsilyl, methylethylsilyl, trifluoromethylbutylsilyl, bis(trifluoromethyl)silyl, di-n-butylsilyl, di-i-propylsilyl, dicyclohexylsilyl, diphenylsilyl, cyclohexylphenylsilyl, t-butylcyclohexylsilyl, di-t-butylsilyl, t-butylphenylsilyl, di(p-tolyl)silyl, dimethylgermyl, diethylgermyl, ethylmethylgermyl, methylphenylgermyl, diphenylgermyl, methylene, dimethylmethylene, diphenylmethylene, ethylene, 1,2-dimethylethylene, 1,2-diphenylethylene, 1,1,2,2-tetramethylethylene, dimethylmethylenedimethylsilyl, methylenediphenylgermyl, methylamine, phenylamine, cyclohexylamine, methylphosphine phenylphosphine, and cyclohexylphosphine.

Illustrative but non-limiting examples of cyclopentadienyl and substituted cyclopentadienyl ligands include cyclopentadienyl, methylcyclopentadienyl, 1,2-dimethylcyclopentadienyl, 1,3-dimethylcyclopentadienyl, 1,3,5 trimethylcyclopentadienyl, tetramethylcyclopentadienyl, 1-methyl-3-butylcyclopentadienyl, n-butylcyclopentadienyl, 1,2-di-n-butylcyclopentadienyl, t-butylcyclopentadienyl, and pentamethylcyclopentadienyl (non-bridged compounds only).

In one embodiment of the invention, the cyclopentadienyl rings are substituted such that the number, kind and placement of substituents on each ring is the same.

In another embodiment of the invention, the cyclopentadienyl rings are substituted such that the number, kind or placement of substituents on each ring is different, for example, but not limited to, (cyclopentadienyl)(tetramethylcyclopentadienyl)zirconium dichloride, (cyclopentadienyl)(pentamethylcyclopentadienyl)zirconium dichloride, (methylcyclopentadienyl)(pentamethylcyclopentadienyl)zirconium dichloride, (1-methyl-3-n-butylcyclopentadienyl)(tetramethylcyclopentadienyl)hafnium dichloride, dimethylsilyl(cyclopentadienyl)(tetramethylcyclopentadienyl)hafnium dimethyl, ethylene(methylcyclopentadienyl)(tetramethylcyclopentadienyl)titanium dichloride and the like.

In the preferred embodiment of the invention, x + y equals 5, 6, 7 or 8.

For purposes of this patent specification the term "carrier" or "support" are interchangeable and can be any support material, preferably a porous support material, such as for example, talc, inorganic oxides, inorganic chlorides and resinous support materials such as polyolefin or polymeric compounds or any other organic support material.

The preferred support materials are inorganic oxide materials, which include those from the Periodic Table of Elements of Groups 2, 3, 4, 5, 13 or 14 metal oxides. In a preferred embodiment, the catalyst support material includes silica, alumina, silica-alumina, and mixtures thereof. Other inorganic oxides that may be employed either alone or in combination with the silica, alumina or silica-alumina are magnesia, titania and zirconia.

### Polymerization Process

The catalyst system of this invention is particularly well suited for the polymerization of monomers, optionally with comonomers in any gas phase polymerization or prepolymerization process or combination thereof.

In the preferred embodiment, this invention is directed toward a gas phase polymerization reaction involving the polymerization of one or more olefins, monoolefins, diolefins, cyclic olefins, acetylenically unsaturated monomers, ethylenically unsaturated non-cyclic non-conjugated polyenes, cyclic non-conjugated polyenes and combinations thereof. Preferably, the monomers are ethylene and alpha-olefins having from 3 to 20 carbon atoms, most preferably 3 to 12 carbon atoms. The invention is particularly suitable for polymerization reactions involving polymerization of one or more of the monomers, for example alphaolefin monomers of ethylene, propylene, butene-1, pentene-1, 4-methylpentene-1, hexene-1, octene-1, decene-1, cyclic olefins such as norbornene and alpha-olefins substituted with aryl groups such as styrene. Other monomers can include diolefins such as 1,5-hexadiene, 1,7-octadiene, norbornadiene, vinylnorbornene and acetylene and substituted allcynes.

In another embodiment, ethylene is polymerized with at least two comonomers to form a terpolymer. Most preferred comonomers for polymerization with ethylene are butene-1, pentene-1, hexene-1, 4-methyl-1-pentene and octene-1.

In another embodiment of the process of the invention, the olefin(s) are prepolymerized in the presence of the catalyst system of the invention prior to the main polymerization. The prepolymerization can be carried out batchwise or continuously in gas, solution or slurry phase including at elevated pressures. For details on prepolymerization see, for example U.S. Patent No. 4,923,833 and 4,921,825 and EP-B-0279 863, published October 14, 1992.

In a gas phase polymerization process a continuous cycle is typically employed wherein one part of the cycle of a reactor, a cycling gas stream (otherwise known as a cycle gas stream or fluidizing medium) is heated in the reactor by the heat of polymerization. This heat is removed in another part of the cycle by a cooling system external to the reactor.

Generally, in a gas fluidized bed process for producing polymer from monomers, a gaseous stream containing one or more monomers is continuously cycled through a fluidized bed in the presence of a catalyst under reactive conditions. The gaseous stream comprising unreacted monomer is withdrawn from the fluidized bed, mixed with polymerizable monomer(s), and recycled back into the reactor. (See for example U.S. Patent Nos. 4,543,399, 4,588,790, 5,352,749 and 5,405,922.) It is within this cycle gas stream that hydrogen generated by the catalyst within the reactor is cycled back into the reactor. Without a hydrogen removal system this accumulation of hydrogen within the system complicates the production of low melt index polymers.

In one embodiment of the invention a process is provided wherein the cycle gas stream contains less than 500 preferably less than 400, more preferably less than 300 and most preferably less than 200 ppm hydrogen.

In another embodiment, the ratio of (Cₓ + H₂)/C_{y} in the cycle gas composition entering the reactor is less than 0.2, where Cₓ is the mole percent of comonomer, for example, hexene-1 and/or butene-1 and C_{y} is the mole percent of monomer, for example, ethylene and/or propylene.

### Polymer Produced by the Process of the Invention

The polymer product of the invention has a density in the range of from 0.87 g/cc to about 0.97 g/cc, preferably 0.88 g/cc to about 0.96 g/cc, more preferably 0.90 g/cc to about 0.95 g/cc and even more preferably 0.91 g/cc to about 0.94 g/cc and most preferably 0.912 g/cc to about 0.935 g/cc.

MWD, or polydispersity, is a well known characteristic of polymers. MWD is generally described as the ratio of the weight average molecular weight (M_{w}) to the number average molecular weight (Mₙ). The ratio M_{w}/Mₙ can be measured directly by gel permeation chromatography techniques, or indirectly, by measuring the ratio of I₂₁ to I₂ as described in ASTM D-1238-F and ASTM D-1238-E respectively. I₂ is well known in the art as equivalent to Melt Index (MI). I₂₁ is also known as high load melt index (HLMI). MI is inversely proportional to the molecular weight of the polymer (M_{w}).

The melt index of the polymers of the invention are generally in the range between from 5 dg/min to 0.01 dg/min, preferably 3 dg/min to 0.10 dg/min and most preferably less than 1 dg/min to 0.10 dg/min. Particularly preferred is a range between 0.05 to 3 dg/min, preferably from 0.01 to 3 dg/min, more preferably 0.5 to 2 dg/min.

The MWD of the polymers of the invention are in the range of greater than 1.5 to greater than 20, preferably in the range of greater than 2.0 to 10 and most preferably in the range of 2.5 to 7.

The ratio of I₂₁/I₂ is known as the melt index ratio (MIR) and for the purposes of this patent specification the ratio is also defined to be melt flow ratio (MFR). MIR is generally proportional to the MWD.

The MIR of the polymers of this invention are generally in the range of greater than 10 to 200, preferably 12 to 60 and most preferably 14 to 45.

The M_{w} of the polymers of the invention are typically greater than 100,000 more preferably greater than 105,000 and even more preferably greater than 110,000 and most preferably greater than 120,000. The high load melt index (HLMI) for the polymers of the invention is in the range of about 1 to 50.

The polymers produced by the process of the invention are useful in such forming operations as film, sheet, and fiber extrusion and co-extrusion as well as blow molding, injection molding and rotary molding. Films include blown or cast films in mono-layer or multilayer constructions formed by coextrusion or by lamination. Such films are useful as shrink film, cling film, stretch film, sealing films, oriented films, snack packaging, heavy duty bags, grocery sacks, baked and frozen food packaging, medical packaging, industrial liners, membranes, in food-contact and non-food contact applications. Fiber forming operations include melt spinning, solution spinning and melt blown fiber operations. Such fibers may be used in woven or non-woven form to make filters, diaper fabrics, medical garments, geotextiles. General extruded articles include medical tubing, wire and cable coatings, geomembranes, and pond liners. Molded articles include single and multi-layered constructions in the form of bottles, tanks, large hollow articles, rigid food containers and toys.

### EXAMPLES

In order to provide a better understanding of the present invention including representative advantages thereof, the following examples are offered.

For the purposes of this patent specification the Mw (molecular weight) of a polymer is determined with a Waters Gel Permeation Chromatograph equipped with ultra styrogel columns and a refractive index detector. The operating temperatures of the instrument was set at 145°C, the eluting solvent was trichlorobenzene, and the colchration standards include sixteen polystyrenes of precisely known molecular weight, ranging from a M_{w} of 500 to a M_{w} of 5.2 million, and a polyethylene standard, NBS 1475.

### EXAMPLE 1

### Catalyst Preparation

Each of 0.6 grams of cyclopentadienyl(tetramethylcyclopentadienyl) zirconium dichloride (Catalyst A), 0.6 grams of cyclopentadienyl (pentamethylcyclopentadienyl) zirconium dichloride (Catalyst B), 0.6 grams of methylcyclopentadienyl(pentamethylcyclopentadienyl) zirconium dichloride (Catalyst C), 0.6 grams of bis(tetramethylcyclopentadienyl) zirconium dichloride (Catalyst D), and 0.6 grams of bis(1-n-butyl-3-methyl cyclopentadienyl) zirconium dichloride (Catalyst E) were separately dissolved in 180 cc of dry toluene at 25 °C under nitrogen in a 500 cc round bottom flask while stirring with a magnetic stirrer. Stirring was continued for 15 minutes, at which time 39.6 cc of 10 wt% methylalumoxane was slowly added. After stirring the resulting solution for an additional 15 minutes, 24.0 grams of a high surface area (Davison 948) silica dehydrated at 800°C was added over a period of 10 minutes. This suspension was then stirred for twenty minutes. The toluene was then removed in vacuo at 50 °C, and the remaining catalyst dried at this temperature for 4 hours.

### POLYMERIZATION TESTS

A sample of each of the metallocenes A-E supported on the treated silica as described above was used for ethylene/1-hexene copolymerization studies as described below. A continuous fluid bed gas-phase reactor operated at 300 psig (2069 kPa) total pressure, 145°F (63°C) reactor temperature and 0.7 ft/s (21.3 cm/s) cycle gas velocity was used for determining catalyst efficiency and response to co-monomer such as 1-hexene. A solution of TEAL (1 wt% in isopentane) was fed into the reactor as a scavenger at a rate of 1 cm³/h. A detailed composition of ethylene and 1-hexene composition produced is included in Table 1, along with the process data. Polymer samples were collected and analyzed after three bed turnovers.

While the present invention has been described and illustrated by reference to particular embodiments, it will be appreciated by those of ordinary skill in the art that the invention lends itself to variations not necessarily illustrated herein. For example, it is not beyond the scope of this invention to further use a hydrogen scrubber to even further lower molecular weight or to use at least one of the metallocene catalysts of the invention with any other metallocene catalyst in one or more reactors, separately or together. For this reason, then, reference should be made solely to the appended claims for the purposes of determining the true scope of the present invention.

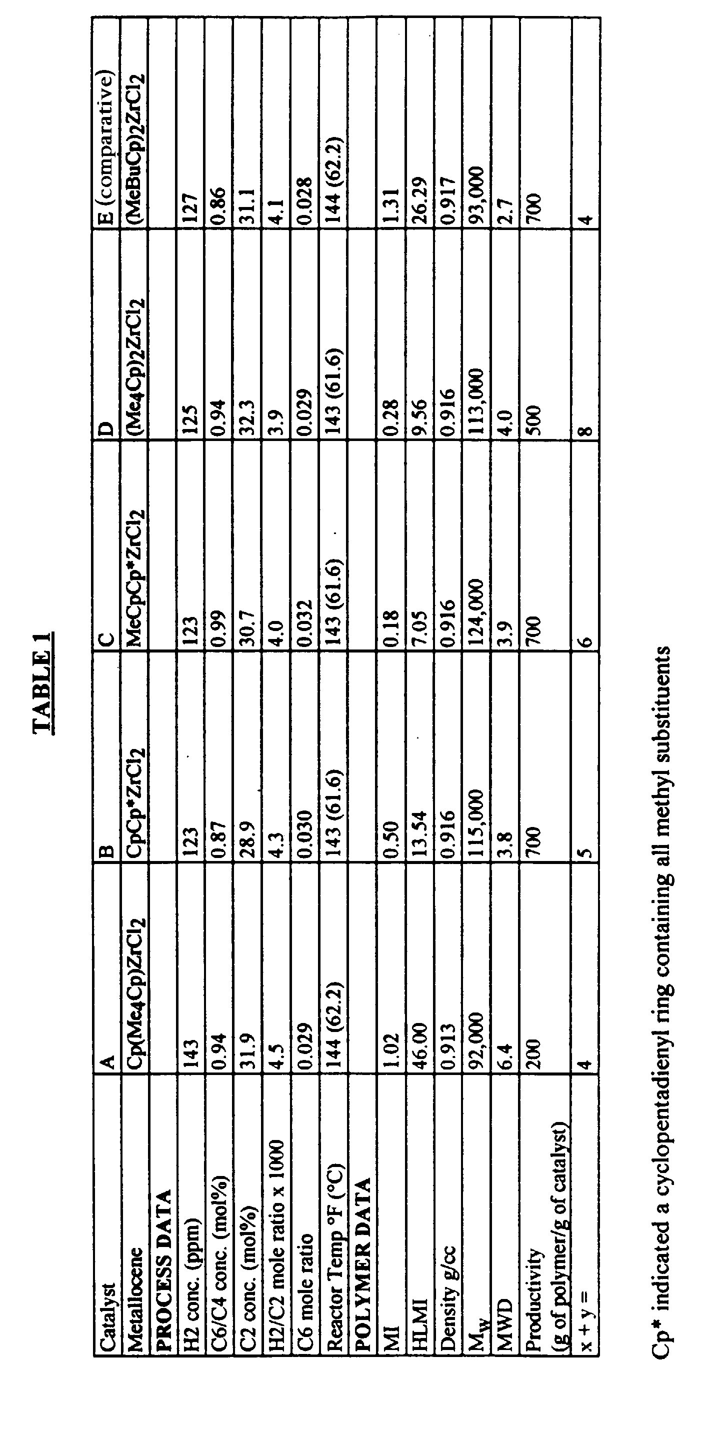

## Claims

1. A continuous process for polymerizing olefins alone or in combination with one or more other olefins in a gas phase polymerization process for producing polymers, said process for polymerizing olefins comprising the steps of:
a) introducing monomer and optionally a comonomer in the presence of a catalyst system comprising:
i) a substituted *bis*(cyclopentadienyl) Group 4, transition metal metallocene component represented by the formula:
(C₅H₅₋ₓRₓ)(C₅H_{5-y}R_{y})MQ₂
wherein:
M is a Group 4 metal, preferably hafnium or zirconium;
(C₅H₅₋ₓRₓ) and (C₅H_{5-y}R_{y}) are each independently a cyclopentadienyl ring substituted with from zero to five R radicals;
x is from 0 to 5 denoting the degree of substitution, y is from 0 to 5 denoting the degree of substitution, and x + y equals 4, 5, 6, 7, or 8, and when x + y = 4, the number of substituents on each ring is different;
each R substituent is independently, a hydrocarbyl radical selected from the group consisting of methyl, ethyl, propyl, or butyl;
Q are independently, hydride radicals, hydrocarbyl radicals, substituted hydrocarbyl radicals, halocarbyl radicals, substituted halocarbyl radicals, and hydrocarbyl-and halocarbyl-substituted organometalloid radicals, an anionic univalent ligand, halogen, alkoxide radicals, aryloxide radicals, amide radicals, phosphide radicals or a combination thereof, or two Q are joined and bound to the metal atom to form a metallacycle ring containing from 3 to 20 carbon atoms or an alkylidene.
ii) an activator for said metallocene component;
iii) a carrier; and
b) withdrawing a polymer product having a melt index in the range of from 0.01 to 5 dg/min.

2. The process of Claim 1 in a gas phase polymerization reactor having a fluidizing medium and a fluidized bed, said process comprising passing a gaseous stream comprising monomer(s) through a reaction zone in the presence of a catalyst system to produce a polymeric product, withdrawing said fluidizing medium comprising unreacted monomer from said reaction zone, mixing said fluidizing medium with polymerizable monomer(s), and recycling said fluidizing medium to said reactor.

3. The process in accordance with any preceding claim wherein the metallocene catalyst component is a bridged metallocene catalyst component represented by the formula:
R"(C₅H₄₋ₓRₓ)(C₅H_{4-y}R_{y})MQ₂
wherein:
M is a Group 4 metal;
(C₅H₄₋ₓRₓ) and (C₅H_{4-y}R_{y}) are each independently a cyclopentadienyl ring substituted with from zero to four R radicals;
x is from 0 to 4 denoting the degree of substitution, y is from 0 to 4 denoting the degree of substitution, and x + y equals 4, 5, 6, 7, or 8, and when x + y = 4, the number of substituents on each ring is different;
each R substituent is independently, a hydrocarbyl radical selected from the group consisting of methyl, ethyl, propyl, or butyl;
Q are independently, hydride radicals, hydrocarbyl radicals, substituted hydrocarbyl radicals, halocarbyl radicals, substituted halocarbyl radicals, and hydrocarbyl-and halocarbyl-substituted organometalloid radicals, an anionic univalent ligand, halogen, alkoxide radicals, aryloxide radicals, amide radicals, phosphide radicals, or a combination thereof, or two Q are joined and bound to the metal atom to form a metallacycle ring containing from 3 to 20 carbon atoms or may be an alkylidene;
and R" is one or more of, or a combination of, a carbon, a germanium, a silicon, a phosphorous or a nitrogen atom containing radical bridging the (C₅H₄₋ₓRₓ) and (C₅H_{4-y}R_{y}) rings including but not limited to R'₂C, R'₂Si, R'₂SiR'₂Si, R'₂SiR'₂C, R'₂Ge, R'₂SiR'₂Ge, R'₂GeR'₂C, R'N, R'P, R'₂CR'N, R'₂CR'P, R'₂Si R'N, R'₂Si R'P, R'₂Ge R'N, R'₂Ge R'P where each R' is independently, a radical group which is hydride, C₁₋₃₀ hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen.

4. The process in accordance with any preceding claim wherein the total number of substituents bonded to the cyclopentadienyl ligand(s) is in the range of 5 to 8.

5. The process in accordance with any preceding claim wherein the polymer product has a melt index in the range of 0.05 to 3 dg/min., preferably from 0.01 dg/min. to 3 dg/min., more preferably 0.5 dg/min. to 2 dg/min.

6. The process of Claim 2 wherein said fluidizing medium withdrawn from the reaction zone comprises less than 200 ppm hydrogen.

7. The process of Claim 2 wherein the polymer product has a weight average molecular weight greater than 100,000, preferably greater than 110,000.

## Patentansprüche

1. Kontinuierliches Verfahren zum Polymerisieren von Olefinen allein oder in Kombination mit einem oder mehreren anderen Olefinen in einem Gasphasenpolymerisationsverfahren zur Herstellung von Polymeren, wobei das Verfahren zum Polymerisieren von Olefinen die Stufen umfaßt, in denen
a) Monomer und gegebenenfalls Comonomer in Gegenwart von einem Katalysatorsystem eingebracht wird, das
i) eine substituierte Bis(cyclopentadienyl)-Gruppe 4-Übergangsmetall-Metallocenkomponente mit der Formel
(C₅H₅₋ₓRₓ)(C₅H_{5-y}R_{y})MQ₂,
in der
M ein Gruppe 4 Metall, vorzugsweise Hafnium oder Zirconium ist,
(C₅H₅₋ₓRₓ) und (C₅H_{5-y}R_{y}) jeweils unabhängig ein Cyclopentadienylring sind, der mit null bis fünf R-Resten substituiert ist,
x 0 bis 5 ist und den Substitutionsgrad bezeichnet, y 0 bis 5 ist und den Substitutionsgrad bezeichnet, und x + y 4, 5, 6, 7 oder 8 ergibt, und, wenn x + y = 4 ist, die Anzahl der Substituenten an jedem Ring unterschiedlich ist;
jeder R-Substituent unabhängig ein Kohlenwasserstoffrest ausgewählt aus der Gruppe bestehend aus Methyl, Ethyl, Propyl oder Butyl ist,
Q unabhängig Hydridreste, Kohlenwasserstoffreste, substituierte Kohlenwasserstoffreste, Halogenkohlenwasserstoffreste, substituierte Halogenkohlenwasserstoffreste und kohlenwasserstoff- und halogenkohlenwasserstoffsubstituierte Organometalloidreste, ein anionischer einwertiger Ligand, Halogen, Alkoxidreste, Aryloxidreste, Amidreste, Phosphidreste oder eine Kombination derselben sind oder zwei Q verbunden und an das Metallatom gebunden sind, um einen Metallacyclusring, der 3 bis 20 Kohlenstoffatome enthält, oder ein Alkyliden zu bilden,
ii) einen Aktivator für die Metallocenkomponente,
iii) einen Träger umfaßt, und
b) Polymerprodukt mit einem Schmelzindex im Bereich von 0,01 bis 5 dg/Min abgezogen wird.

2. Verfahren nach Anspruch 1 in einem Gasphasenpolymerisationsreaktor mit einem Verwirbelungsmedium und einem Wirbelbett, bei dem ein gasförmiger Strom, der Monomer(e) umfaßt, in Gegenwart eines Katalysatorsystems durch eine Reaktionszone geleitet wird, um ein polymeres Produkt herzustellen, das Verwirbelungsmedium, das nicht umgesetztes Monomer umfaßt, aus der Reaktionszone abgezogen wird, das Verwirbelungsmedium mit polymerisierbarem Monomer oder polymerisierbaren Monomeren gemischt wird und das Verwirbelungsmedium in den Reaktor zurückgeführt wird.

3. Verfahren nach einem der vorhergehenden Ansprüche, bei dem die Metallocenkatalysatorkomponente eine verbrückte Metallocenkatalysatorkomponente mit der Formel
R"(C₅H₄₋ₓRₓ)(C₅H_{4-y}R_{y})MQ₂
ist, in der
M ein Gruppe 4 Metall ist,
(C₅H₄₋ₓRₓ) und (C₅H_{4-y}R_{y}) jeweils unabhängig ein Cyclopentadienylring sind, der mit null bis vier R-Resten substituiert ist,
x 0 bis 4 ist und den Substitutionsgrad bezeichnet, y 0 bis 4 ist und den Substitutionsgrad bezeichnet, und x + y 4, 5, 6, 7 oder 8 ergibt, und, wenn x + y = 4 ist, die Anzahl der Substituenten an jedem Ring unterschiedlich ist; jeder R-Substituent unabhängig ein Kohlenwasserstoffrest ausgewählt aus der Gruppe bestehend aus Methyl, Ethyl, Propyl oder Butyl ist,
Q unabhängig Hydridreste, Kohlenwasserstoffreste, substituierte Kohlenwasserstoffreste, Halogenkohlenwasserstoffreste, substituierte Halogenkohlenwasserstoffreste und kohlenwasserstoff- und halogenkohlenwasserstoffsubstituierte Organometalloidreste, ein anionischer einwertiger Ligand, Halogen, Alkoxidreste, Aryloxidreste, Amidreste, Phosphidreste oder eine Kombination derselben sind oder zwei Q verbunden und an das Metallatom gebunden sind, um einen Metallacyclusring, der 3 bis 20 Kohlenstoffatome enthält, oder ein Alkyliden zu bilden, und
R" ein oder mehrere von oder eine Kombination aus einem Kohlenstoff-, Germanium-, Silicium-, Phosphor- oder Stickstoffatom enthaltenden Rest ist, der die (C₅H₄₋ₓRₓ)- und (C₅H_{4-y}R_{y})-Ringe verbrückt, einschließlich, aber nicht beschränkt auf R'₂C, R'₂Si, R'₂SiR'₂Si, R'₂SiR'₂C, R'₂Ge, R'₂SiR'₂Ge, R'₂GeR'₂C, R'N, R'P, R'₂, R'₂CR'N, R'₂CR'P, R'₂SiR'N, R'₂SiR'P, R'₂GeR'N, R'₂GeR'P, wobei jedes R' unabhängig eine Restgruppe ist, die Hydrid, C₁₋₃₀-Kohlenwasserstoff, substituierter Kohlenwasserstoff, Halogenkohlenwasserstoff, substituierter Halogenkohlenwasserstoff, kohlenwasserstoffsubstituiertes Organometalloid, halogenkohlenwasserstoffsubstituiertes Organometalloid, disubstituiertes Bor, disubstituiertes Pnictogen, substituiertes Chalcogen oder Halogen ist.

4. Verfahren nach einem der vorhergehenden Ansprüche, bei dem die Gesamtanzahl der an den Cyclopentadienylliganden/die Cyclopentadienylliganden gebundenen Substituenten im Bereich von 5 bis 8 liegt.

5. Verfahren gemäß einem der vorhergehenden Ansprüche, bei dem das Polymerprodukt einen Schmelzindex im Bereich von 0,05 bis 3 dg/Min, vorzugsweise 0,01 dg/Min bis 3 dg/Min, insbesondere 0,5 dg/Min bis 2 dg/Min hat.

6. Verfahren nach Anspruch 2, bei dem das aus der Reaktionszone abgezogene Verwirbelungsmedium weniger als 200 ppm Wasserstoff umfaßt.

7. Verfahren nach Anspruch 2, bei dem das Polymerprodukt ein durchschnittliches Molekulargewicht (Gewichtsmittel) von mehr als 100 000, vorzugsweise mehr als 110 000 hat.

## Revendications

1. Procédé continu pour la polymérisation d'oléfines seules ou en association avec une ou plusieurs autres oléfines dans un procédé de polymérisation en phase gazeuse pour la production de polymères, ledit procédé de polymérisation d'oléfines comprenant les étapes consistant :
a) à introduire un monomère et, facultativement, un comonomère en présence d'une formulation de catalyseur comprenant :
i) un constituant métallocène bis(cyclopentadiényle) substitué - métal de transition du Groupe 4 représenté par la formule :
(C₅H₅₋ₓRₓ)(C₅H_{5-y}R_{y})MQ₂
dans laquelle :
M représente un métal du Groupe 4, de préférence l'hafnium ou le zirconium ;
(C₅H₅₋ₓRₓ) et (C₅H_{5-y}R_{y}) représentent chacun, indépendamment un noyau cyclopentadiényle substitué avec zéro à cinq radicaux R ;
x a une valeur de 0 à 5 et désigne le degré de substitution, y a une valeur de 0 à 5 et désigne le degré de substitution, et la somme x + y est égale à 4, 5, 6, 7 ou 8 et, lorsque la somme x + y est égale à 4, les nombres de substituants sur les noyaux sont différents ;
chaque substituant R représente, indépendamment, un radical hydrocarbyle choisi dans le groupe consistant en les radicaux méthyle, éthyle, propyle et butyle ;
Q représente, indépendamment, des radicaux hydrure, des radicaux hydrocarbyle, des radicaux hydrocarbyle substitués, des radicaux halogénocarbyle, des radicaux halogénocarbyle substitués et des radicaux organométalloïdiques à substituants hydrocarbyle et halogénocarbyle, un ligand univalent anionique, un halogène, des radicaux alcoolate, des radicaux aryloxyde, des radicaux amide, des radicaux phosphure ou une de leurs associations, ou bien deux radicaux Q sont joints et liés à l'atome de métal pour former un noyau consistant en un métallacycle contenant 3 à 20 atomes de carbone ou un groupe alkylidène ;
ii) un activateur pour ledit métallocène ;
iii) un support ; et
b) à décharger un produit polymérique ayant un indice de fluidité compris dans l'intervalle de 0,01 à 5 dg/min.

2. Procédé suivant la revendication 1, mis en oeuvre dans un réacteur de polymérisation en phase gazeuse renfermant un milieu de fluidisation et un lit fluidisé, ledit procédé comprenant les étapes consistant à faire passer un courant gazeux comprenant un ou plusieurs monomères à travers une zone réactionnelle en présence d'une formulation de catalyseur pour former un produit polymérique, à décharger ledit milieu de fluidisation comprenant le monomère n'ayant pas réagi de ladite zone réactionnelle, à mélanger ledit milieu de fluidisation avec un ou plusieurs monomères polymérisables, et à recycler ledit milieu de fluidisation audit réacteur.

3. Procédé suivant l'une quelconque des revendications précédentes, dans lequel le constituant de catalyseur du type métallocène est un constituant de catalyseur du type métallocène ponté représenté par la formule :
R"(C₅H₄₋ₓRₓ) (C₅H_{4-y}R_{y})MQ₂
dans laquelle :
M représente un métal du Groupe 4 ;
(C₅H₄₋ₓRₓ) et (C₅H_{4-y}R_{y}) représentent chacun, indépendamment un noyau cyclopentadiényle substitué avec zéro à quatre radicaux R ;
x a une valeur de 0 à 4 et désigne le degré de substitution, y a une valeur de 0 à 4 et désigne le degré de substitution, et la somme x + y est égale à 4, 5, 6, 7 ou 8 et, lorsque la somme x + y est égale à 4, les nombres de substituants sur les noyaux sont différents ;
chaque substituant R représente, indépendamment, un radical hydrocarbyle choisi dans le groupe consistant en les radicaux méthyle, éthyle, propyle et butyle ;
Q représente, indépendamment, des radicaux hydrure, des radicaux hydrocarbyle, des radicaux hydrocarbyle substitués, des radicaux halogénocarbyle, des radicaux halogénocarbyle substitués et des radicaux organométalloïdiques à substituants hydrocarbyle et halogénocarbyle, un ligand univalent anionique, un halogène, des radicaux alcoolate, des radicaux aryloxyde, des radicaux amide, des radicaux phosphure ou une de leurs associations, ou bien deux radicaux Q sont joints et liés à l'atome de métal pour former un noyau consistant en un métallacycle contenant 3 à 20 atomes de carbone ou peuvent représenter un radical alkylidène ;
et R" représente un ou plusieurs, ou une association de, radicaux contenant un atome de carbone, un atome de germanium, un atome de silicium, un atome de phosphore ou un atome d'azote assurant le pontage des noyaux (C₅H₄₋ₓRₓ) et (C₅H_{4-y}R_{y}) comprenant, à titre non limitatif, R'₂C, R'₂Si, R'₂SiR'₂Si, R'₂SiR'₂C, R'₂Ge, R'₂SiR'₂Ge, R'₂GeR'₂C' R'N, R'P, R'₂CR'N, R'₂CR'P, R'₂SiR'N, R'₂SiR'P, R'₂GeR'N, R'₂GeR'P dans lesquels chaque groupe R' représente, indépendamment, un radical qui est un radical hydrure, hydrocarbyle en C₁ à C₃₀, hydrocarbyle substitué, halogénocarbyle, halogénocarbyle substitué, un radical organométalloïdique à substituant hydrocarbyle, un radical organométalloïdique à substituant halogénocarbyle, un atome de bore disubstitué, un atome d'azote disubstitué, un chalcogène substitué ou un halogène.

4. Procédé suivant l'une quelconque des revendications précédentes, dans lequel le nombre total de substituants liés au(x) ligand(s) cyclopentadiényle va de 5 à 8.

5. Procédé suivant l'une quelconque des revendications précédentes, dans lequel le produit polymérique a un indice de fluidité compris dans l'intervalle de 0,05 à 3 dg/min, avantageusement de 0,01 dg/min à 3 dg/min, de préférence de 0,5 dg/min à 2 dg/min.

6. Procédé suivant la revendication 2, dans lequel le milieu de fluidisation déchargé de la zone réactionnelle comprend moins de 200 ppm d'hydrogène.

7. Procédé suivant la revendication 2, dans lequel le produit polymérique a une moyenne pondérale du poids moléculaire supérieur à 100 000, de préférence supérieur à 110 000.
